# EUROPÄISCHE PATENTANMELDUNG

(11) **EP 4 494 839 A1**
(43) Veröffentlichungstag der Anmeldung: **22.01.2025**
(21) Anmeldenummer: 24188870.0
(22) Anmeldetag: 16.07.2024
(51) Int. Cl.: B29C 49/42, B29C 49/78, B29C 49/06, B29C 49/36, B29C 49/02, B29K 67/00, B29L 31/00

(54) **BEHÄLTERBEHANDLUNGSANLAGE ZUM HERSTELLEN UND BEHANDELN VON VORFORMLINGEN**

(30) Priorität: 19.07.2023 DE 102023119034
(71) Anmelder: Krones AG, 93073 Neutraubling (DE)
(72) Erfinder: Wuensche, Dieter, 93073 Neutraubling (DE); Killermann, Christian, 93073 Neutraubling (DE); Kindl, Norbert, 93073 Neutraubling (DE); Roth, Andreas, 93073 Neutraubling (DE); Nebl, Florian, 93073 Neutraubling (DE); Geltinger, Florian, 93073 Neutraubling (DE)
(74) Vertreter: Grünecker Patent- und Rechtsanwälte PartG mbB

(57) **Zusammenfassung**

Behälterbehandlungsanlage zum Herstellen und Behandeln von Vorformlingen, wobei die Behälterbehandlungsanalage eine Herstellungsmaschine zum Herstellen von Vorformlingen, wenigstens eine in einer Transportrichtung der Vorformlinge stromab der Herstellungsmaschine angeordnete Behälterbehandlungsmaschine und eine Steuereinheit umfasst, wobei die Steuereinheit ausgebildet ist, basierend auf einem Stillstand einer Komponente der Behälterbehandlungsanlage einen Strom von Vorformlingen in der Behälterbehandlungsanlage zu steuern.

## Beschreibung

Die vorliegende Erfindung betrifft eine Behälterbehandlungsanlage zum Herstellen und Behandeln von Vorformlingen gemäß unabhängigem Anspruch 1 und ein entsprechendes Verfahren gemäß unabhängigem Anspruch 9.

### Stand der Technik

Behälterbehandlungsanlagen sind aus dem Stand der Technik hinreichend bekannt. Behälterbehandlungsanlagen umfassen typischerweise eine Blasformmaschine, mittels welcher Vorformlinge zu Behältern ausgeformt werden können. Die Vorformlinge werden im Stand der Technik jedoch nicht in der Behälterbehandlungsanlage selbst, sondern in einem zeitlich und örtlich getrennten Prozess hergestellt. Zur Herstellung der Vorformlinge kommen typischerweise Spritzgussverfahren zum Einsatz.

Die zeitlich und örtlich getrennte Herstellung der Vorformlinge und deren Weitverarbeitung zu Behältern bringt jedoch eine Reihe von Nachteilen mit sich. So können die Vorformlinge beispielsweise bei ihrem Transport vom Herstellungsort zur Behälterbehandlungsanlage beschädigt werden oder ihre Sterilität verlieren. Zudem ist der Transport beziehungsweise die Lagerung der Vorformlinge mit relativ hohen Transport- beziehungsweise Lagerkosten verbunden.

### Aufgabe

Ausgehend vom bekannten Stand der Technik liegt die zu lösende technische Aufgabe der vorliegenden Erfindung darin, den Herstellungs- und Verarbeitungsprozess von Vorformlingen effizienter zu gestalten und dabei störungsbedingte Stillstandzeiten der Behälterbehandlungsanlage zu minimieren.

### Lösung

Diese Aufgabe wird durch die Behälterbehandlungsanlage zum Herstellen und Behandeln von Vorformlingen gemäß unabhängigem Anspruch 1 und das entsprechende Verfahren zum Herstellen und Behandeln von Vorformlingen gemäß unabhängigem Anspruch 9 gelöst. Bevorzugte Weiterbildungen sind in den abhängigen Ansprüchen erfasst.

Erfindungsgemäß ist eine Behälterbehandlungsanlage zum Herstellen und Behandeln von Vorformlingen vorgesehen, wobei die Behälterbehandlungsanalage eine Herstellungsmaschine zum Herstellen von Vorformlingen, insbesondere eine Spritzgussmaschine, wenigstens eine in einer Transportrichtung der Vorformlinge stromab der Herstellungsmaschine angeordnete Behälterbehandlungsmaschine und eine Steuereinheit umfasst, wobei die Steuereinheit ausgebildet ist, basierend auf einem Stillstand einer Komponente der Behälterbehandlungsanlage einen Strom von Vorformlingen in der Behälterbehandlungsanlage zu steuern.

Die Herstellungsmaschine ist vorzugsweise ausgebildet in der Getränkeindustrie verwendete Vorformlinge aus Kunststoff, vorzugsweise Polyethylenterephthalat (PET), Polyethylen (PE) oder Polypropylen (PP), herzustellen. Diese Ausgestaltungsart ist jedoch als nicht beschränkend zu verstehen. So kann die Herstellungsmaschine auch ausgestaltet sein, Vorformlinge beliebiger Art aus einem beliebigen Kunststoff beziehungsweise thermoplastischen Material herzustellen.

Bei der Herstellungsmaschine kann es sich insbesondere um eine Spritzgussmaschine handeln. Alternativ kann es sich auch um eine Vorrichtung zur Herstellung von Vorformlingen mittels eines Compression Moulding Verfahrens oder um eine Vorrichtung zum Herstellen von Vorformlingen mittels eines Injection Compression Moulding Verfahrens handeln. Es kann sich jedoch auch um jede andere Vorrichtung handeln, welche zum Herstellen eines Vorformlings geeignet ist.

Bei der wenigstens einen Behälterbehandlungsmaschine kann es sich um jede Art von Vorrichtung handeln, welche zur Behandlung von Behältern geeignet ist. Beispielsweise kann es sich um eine Blasformmaschine, wie etwa eine Streckblasform- oder eine Extrusionsblasformmaschine, handeln. Die Blasformmaschine kann zum Ausformen der Vorformlinge zu Behältern, vorzugsweise in der Getränkeindustrie verwendeten Flaschen, ausgestaltet sein. Bei der wenigstens einen Behälterbehandlungsmaschine kann sich jedoch auch um eine Vorrichtung zum Vorbehandeln von Behältern, wie beispielweise eine Vorrichtung zur Corona- oder zur Plasmavorbehandlung, um einen Füller zum Befüllen von Behältern mit einem Getränk oder jeder anderen Flüssigkeit, um eine Etikettiermaschine, um eine Direktdruckmaschine oder einen Verschließer zum Verschließen von Behältern handeln. In einer Ausführungsform kann es auch vorgesehen sein, dass eine beliebige Kombination der oben genannten oder jeder anderen Behälterbehandlungsmaschine in einer Transportrichtung der Vorformlinge stromab der Herstellungsmaschine angeordnet ist.

Unter einer Komponente der Behälterbehandlungsanlage kann beispielsweise die wenigstens eine Behälterbehandlungsmaschine oder die Herstellungsmaschine verstanden werden. Mit Komponente kann allerdings auch eine optionale Transportvorrichtung gemeint sein, welche beispielsweise die Herstellungsmaschine mit der wenigstens einen Behälterbehandlungsmaschine oder mehrere Behälterbehandlungsmaschinen miteinander verbindet. Die Komponente kann allerdings auch jedes andere Bauteil der Behälterbehandlungsanlage darstellen, welches einen Stillstand aufweisen kann.

Unter einem Stillstand ist eine Störung, welche beispielsweise durch einen Defekt oder einen Blockade an einer Komponente hervorgerufen werden kann oder ein wartungsbedingter Stillstand einer Komponente zu verstehen, welcher beispielsweise durch einen wartungsbedingten Wechsel einer Unterkomponente der Komponente oder durch einen anstehenden Wechsel eines Verbrauchsmittels der Komponente hervorgerufen werden kann.

Unter Steuern eines Stroms von Vorformlingen ist insbesondere eine Abfuhr von Vorformlingen von der Herstellungsmaschine und/oder eine Zufuhr von Vorformlingen an die wenigstens eine Behälterbehandlungsmaschine zu verstehen.

Durch die erfindungsgemäße Behälterbehandlungsanlage können Vorformlinge in einer Anlage hergestellt und weiterverarbeitet werden und somit transportbedingte Beschädigungen oder Dekontaminationen der Vorformlinge verhindert werden. Ein Aussortieren durch den Transport beschädigter oder kontaminierter Vorformlinge in der Behälterbehandlungsanlage ist somit nicht notwendig, wodurch die Effizienz des Betriebs der Anlage gesteigert werden kann. Durch das Regeln des Stroms von Vorformlingen basierend auf dem Stillstand einer Komponente kann zudem ein Betrieb der Behälterbehandlungsanlage auch bei Vorliegen eines Stillstands einer Komponente zumindest teilweise aufrechterhalten werden. Somit kann ein möglichst effizienter Betrieb der Behälterbehandlungsanlage sichergestellt werden und insbesondere störungs- beziehungsweise wartungsbedingte Stillstandzeiten der gesamten Behälterbehandlungsanlage vermieden werden.

In einer Ausführungsform kann es vorgesehen sein, dass die Komponente die wenigstens eine Behälterbehandlungsmaschine umfasst. Durch das Steuern des Stroms der Vorformlinge kann somit auch bei einem Stillstand der wenigstens einen Behälterbehandlungsmaschine ein weiterer Betrieb der Herstellungsmaschine und/oder anderer Komponenten der Behälterbehandlungsmaschine gewährleistet werden.

In einer Ausführungsform kann, wenn eine Zeitdauer des Stillstands kleiner als ein Schwellenwert ist, das Steuern des Stroms der Vorformlinge das Abführen der durch die Herstellungsmaschine hergestellten Vorformlinge in eine erste Speichervorrichtung umfassen. Durch Speichern der mittels der Herstellungsmaschine hergestellten Vorformlinge in der ersten Speichervorrichtung kann ein Weiterbetrieb der Herstellungsmaschine auch bei Stillstand der wenigstens einen Behälterbehandlungsmaschine sichergestellt werden. Dadurch, dass die Vorformlinge nur solange in die erste Speichervorrichtung abgeführt werden, bis die Zeitdauer des Stillstands einen Schwellenwert erreicht, kann die Anzahl der in die erste Speichervorrichtung abgeführten Vorformlinge flexibel eingestellt werden.

In einer Weiterbildung der beiden vorhergehenden Ausführungsformen kann, wenn eine Zeitdauer des Stillstands größer als ein Schwellenwert ist, das Steuern des Stroms von Vorformlingen das Abführen der durch die Herstellungsmaschine hergestellten Vorformlinge in eine Box für Schlechtteile zum Zerkleinern der Vorformlinge, insbesondere einen Schredder, umfassen. Somit kann eine Überproduktion an Vorformlingen verhindert werden, ohne dass der Betrieb der Herstellungsmaschine unterbrochen werden muss und durch das Zerkleinern der Vorformlinge möglichst platzsparend mit überschüssigen Vorformlingen verfahren werden.

In einer Ausführungsform kann die Steuereinheit ausgebildet sein, den Schwellenwert basierend auf einer Speicherkapazität der ersten Speichervorrichtung zu bestimmen. Somit kann sichergestellt werden, dass die durch die Herstellungsmaschine erzeugten Vorformlinge erst dann durch die Box für Schlechtteile zerkleinert werden, wenn die Speicherkapazität der ersten Speichervorrichtung vollkommen ausgeschöpft ist und somit ein unnötiger Materialverbrauch verhindert werden.

In einer Ausführungsform kann die Komponente die Herstellungsmaschine umfassen. Somit kann bei einem Stillstand der Herstellungsmaschine der Strom von Vorformlingen derart gesteuert werden, dass ein Betrieb der wenigstens einen Behälterbehandlungsmaschine aufrechterhalten und ein Stillstand der gesamten Behälterbehandlungsanlage vermieden wird.

In einer Weiterbildung der vorhergehenden Ausführungsform kann das Steuern des Stroms von Vorformlingen das Zuführen von Vorformlingen an die wenigstens eine Behälterbehandlungsmaschine aus einer zweiten Speichervorrichtung umfassen. Durch das Zuführen der Vorformlinge aus der zweiten Speichervorrichtung kann auch bei einem Stillstand der Herstellungsmaschine eine kontinuierliche Versorgung der wenigstens einen Behälterbehandlungsmaschine mit Vorformlingen sichergestellt werden.

In einer Ausführungsform kann die erste und die zweite Speichervorrichtung identisch und als eine Speichereinheit ausgestaltet sein. In diesem Fall können beispielsweise die bei einem Stillstand der Blasformmaschine an die Speichereinheit zugeführten Vorformlinge zu einem späteren Zeitpunkt wieder der wenigstens einen Behälterbehandlungsmaschine zugeführt werden, was beispielsweise dann der Fall sein kann, wenn die Herstellungsmaschine einen Stillstand aufweist.

In einer Weiterbildung der vorhergehenden Ausführungsform kann eine Sortiervorrichtung zwischen der zweiten Speichervorrichtung und der wenigstens einen Behälterbehandlungsmaschine angeordnet sein und die Vorformlinge der wenigstens einen Behälterbehandlungsmaschine geordnet zugeführt werden können. Somit kann sichergestellt werden, dass die typischerweise als Schüttgut in der Speichervorrichtung gelagerten Vorformlinge vor Zufuhr an die wenigstens eine Behälterbehandlungsmaschine vereinzelt werden und der wenigstens einen Behälterbehandlungsmaschine geordnet übergeben werden und insbesondere eine mögliche durch ungeordnete Vorformlinge hervorgerufene Blockade an der wenigstens einen Behälterbehandlungsmaschine verhindert werden.

In einer Ausführungsform kann die Sortiervorrichtung als Rollensortierer oder Scheibensortierer ausgestaltet sein. Diese Ausführungsformen erlauben ein zuverlässiges Sortieren von Vorformlingen, insbesondere eine Ausrichtung der Vorformlinge

Erfindungsgemäß ist außerdem ein Verfahren zum Herstellen und Behandeln von Vorformlingen in einer Behälterbehandlungsanlage vorgesehen, wobei die Behälterbehandlungsanlage eine Herstellungsmaschine zum Herstellen von Vorformlingen, insbesondere eine Spritzgussmaschine, wenigstens eine in einer Transportrichtung der Vorformlinge stromab der Herstellungsmaschine angeordnete Behälterbehandlungsmaschine und eine Steuereinheit umfasst, wobei ein Strom von Vorformlingen in der Behälterbehandlungsanlage, basierend auf einem Stillstand einer Komponente der Behälterbehandlungsanlage durch die Steuereinheit gesteuert wird.

Durch das Regeln des Stroms von Vorformlingen basierend auf einem Stillstand einer Komponente kann ein Betrieb der Behälterbehandlungsanlage auch bei einem Stillstand einer Komponente zumindest teilweise aufrechterhalten werden. Somit kann ein möglichst effizienter Betrieb der Behälterbehandlungsanlage sichergestellt werden und insbesondere störungs- beziehungsweise wartungsbedingte Stillstandzeiten der gesamten Behälterbehandlungsanlage vermieden werden.

In einer Ausführungsform kann die Komponente die wenigstens eine Behälterbehandlungsmaschine umfassen. Durch das Steuern des Stroms der Vorformlinge kann somit auch bei einem Stillstand der wenigstens einen Behälterbehandlungsmaschine beispielsweise ein weiterer Betrieb der Herstellungsmaschine der Behälterbehandlungsmaschine gewährleistet werden.

In einer Weiterbildung dieser Ausführungsform kann, wenn eine Zeitdauer des Stillstands kleiner als ein Schwellenwert ist, der Strom der Vorformlinge derart gesteuert werden, dass die durch die Herstellungsmaschine hergestellten Vorformlinge in eine erste Speichervorrichtung überführt werden. Durch Speichern der mittels der Herstellungsmaschine hergestellten Vorformlinge in der ersten Speichervorrichtung kann ein Weiterbetrieb der Herstellungsmaschine auch bei Stillstand der wenigstens einen Behälterbehandlungsmaschine sichergestellt werden. Dadurch, dass die Vorformlinge nur solange in die erste Speichervorrichtung abgeführt werden, bis die Zeitdauer des Stillstands einen Schwellenwert erreicht, kann die Anzahl der in die Speichervorrichtung abgeführten Vorformlinge flexibel eingestellt werden.

In einer Weiterbildung der beiden vorhergehenden Ausführungsformen kann, wenn eine Zeitdauer des Stillstands größer als ein Schwellenwert ist, der Strom der Vorformlinge derart gesteuert werden, dass die durch die Herstellungsmaschine hergestellten Vorformlinge einer Box für Schlechtteile zum Zerkleinern der Vorformlinge, insbesondere einem Schredder, zugeführt werden. Somit kann eine Überproduktion an Vorformlingen verhindert werden, ohne dass der Betrieb der Herstellungsmaschine unterbrochen werden muss und durch das Zerkleinern der Vorformlinge zugleich möglichst platzsparend mit dem Überschuss an Vorformlingen verfahren werden.

In einer Weiterbildung der beiden vorhergehenden Ausführungsformen kann der Schwellenwert durch die Steuereinheit basierend auf einer Speicherkapazität der ersten Speichervorrichtung bestimmt werden. Somit kann sichergestellt werden, dass die durch die Herstellungsmaschine erzeugten Vorformlinge erst dann zerkleinert werden, wenn die Speicherkapazität der ersten Speichervorrichtung vollkommen ausgeschöpft und somit ein unnötiger Materialverbrauch verhindert werden.

In einer Ausführungsform kann die Komponente die Herstellungsmaschine umfassen und der Strom von Vorformlingen derart gesteuert werden, dass der wenigstens einen Behälterbehandlungsmaschine Vorformlinge aus einer zweiten Speichervorrichtung zugeführt werden. Somit kann bei einem Stillstand der Herstellungsmaschine der Strom von Vorformlingen derart gesteuert werden, um einen Betrieb der wenigstens einen Behälterbehandlungsmaschine aufrechtzuerhalten und einen Stillstand der gesamten Behälterbehandlungsanlage zu vermeiden.

In einer Ausführungsform kann die erste und die zweite Speichervorrichtung identisch und als Speichereinheit ausgestaltet sein. In diesem Fall können beispielsweise die bei einem Stillstand der Blasformmaschine an die Speichereinheit zugeführten Vorformlinge zu einem späteren Zeitpunkt wieder der Blasformmaschine zugeführt werden, was beispielsweise dann der Fall sein kann, wenn die Herstellungsmaschine einen Stillstand aufweist.

In einer Weiterbildung der vorhergehenden Ausführungsform kann eine Sortiervorrichtung zwischen der zweiten Speichervorrichtung und der wenigstens einen Behälterbehandlungsmaschine angeordnet sein und die Vorformlinge der wenigstens einen Behälterbehandlungsmaschine geordnet zugeführt werden. Somit kann sichergestellt werden, dass die typischerweise als Schüttgut in der Speichervorrichtung gelagerten Vorformlinge vor Zufuhr an die wenigstens eine Behälterbehandlungsmaschine vereinzelt werden und der wenigstens einen Behälterbehandlungsmaschine geordnet übergeben werden und insbesondere eine mögliche durch ungeordnete Vorformlinge hervorgerufene Blockade an der wenigstens einen Behälterbehandlungsmaschine verhindert werden.

In einer Ausführungsform kann die Sortiervorrichtung als Rollensortierer oder als Scheibensortierer ausgestaltet sein.

### Kurze Beschreibung der Figuren

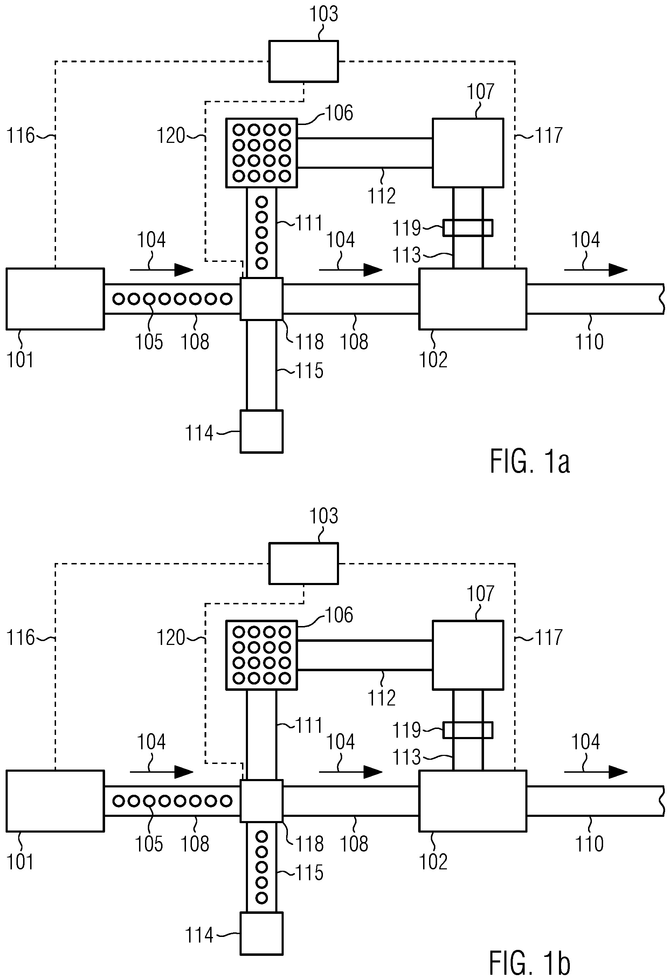

- Figur 1a:: Betriebszustand einer Behälterbehandlungsanlage zum Herstellen und Behandeln eines Vorformlings gemäß einer Ausführungsform
- Figur 1b:: Betriebszustand einer Behälterbehandlungsanlage zum Herstellen und Behandeln eines Vorformlings gemäß einer weiteren Ausführungsform

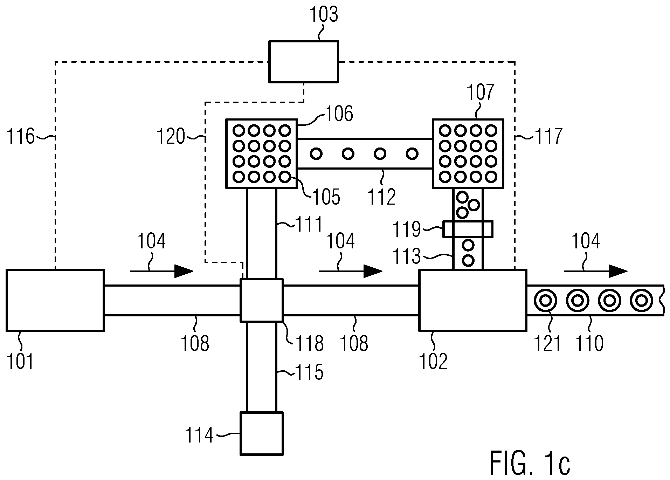

- Figur 1c:: Betriebszustand einer Behälterbehandlungsanlage zum Herstellen und Behandeln eines Vorformlings gemäß einer weiteren Ausführungsform

### Ausführliche Beschreibung der Figuren

Figuren 1a - 1c zeigen Betriebszustände einer Behälterbehandlungsanlage 100 zum Herstellen und Behandeln eines Vorformlings gemäß verschiedener Ausführungsformen.

Erfindungsgemäß umfasst die Behälterbehandlungsanlage 100 eine Herstellungsmaschine 101, wenigstens eine in einer Transportrichtung 104 der Vorformlinge 105 stromab der Herstellungsmaschine 101 angeordnete Behälterbehandlungsmaschine 102 und eine Steuereinheit 103. Erfindungsgemäß ist die Steuereinheit 103 ausgebildet basierend auf einem Stillstand einer Komponente der Behälterbehandlungsanlage 100 einen Strom von Vorformlingen 105 in der Behälterbehandlungsanlage 100 zu steuern.

Die Herstellungsmaschine 101 kann ausgestaltet sein, in der Getränkeindustrie verwendete Vorformlinge 105 aus Kunststoff herzustellen, wobei der Kunststoff vorzugsweise Polyethylenterephthalat (PET), Polyethylen (PE) oder Polypropylen (PP) umfassen kann. Diese Ausgestaltung der Herstellungsmaschine 101 ist allerdings als nicht beschränkend zu verstehen, so dass die Herstellungsmaschine 101 auch ausgestaltet sein kann, Vorformlinge 105 beliebiger Art aus einem beliebigen Kunststoff beziehungsweise thermoplastischen Material herzustellen.

Bei der Herstellungsmaschine 101 kann es sich insbesondere um eine Spritzgussmaschine handeln. Alternativ kann es sich auch um eine Vorrichtung zur Herstellung von Vorformlingen mittels eines Compression Moulding Verfahrens oder um eine Vorrichtung zum Herstellen von Vorformlingen mittels eines Injection Compression Moulding Verfahrens handeln. Es kann sich jedoch auch um jede andere Vorrichtung handeln, welche zum Herstellen eines Vorformlings geeignet ist.

In den im Zusammenhang mit den Figuren 1a - 1c beschriebenen Ausführungsformen ist die wenigstens eine Behälterbehandlungsmaschine 102 als Blasformmaschine 102 ausgestaltet, wobei es sich bei der Blasformmaschine 102 beispielsweise um eine Streckblasformmaschine oder eine Extrusionsblasformmaschine handeln kann. Der Blasformmaschine 102 kann beispielsweise eine optionale Heizvorrichtung zugeordnet sein, um die Vorformlinge 105 mit Wärme beziehungsweise elektromagnetischer Strahlung zu beaufschlagen und somit eine bestimmte Temperatur oder eine bestimmte Temperaturverteilung in den Vorformlingen 105 zu erzeugen bevor diese zu Behältern ausgeformt werden. In einer Ausführungsform kann die Blasformmaschine 102 als Rundläufermaschine ausgestaltet sein, wobei die Rundläufermaschine eine Vielzahl von entlang des Umfangs der Rundläufermaschine angeordneter Blasformaufnahmen umfassen kann. Jeder Blasformaufnahme kann eine Blaseinheit zugeordnet sein, wobei die Blaseinheit ausgestaltet sein kann, einen in einer Blasform befindlichen durch die optionale Heizvorrichtung vortemperierten Vorformling mit Druckluft zu beaufschlagen und diesen zu einem Behälter 121 auszuformen.

Bei den Behältern 121 kann es sich vorzugsweise um in der Getränkeindustrie verwendete Flaschen handeln. Alternativ kann es sich jedoch auch um Behälter beliebiger Art, wie beispielsweise Dosen, Becher, Gläser oder Tuben handeln, wie sie beispielsweise in der Getränke-, Pharma-, Gesundheits- oder Lebensmittelindustrie verwendet werden, oder auch jeden anderen Behälter 121, welcher zum Aufnehmen eines beliebigen flüssigen oder pastösen Mediums geeignet sein kann.

Die Ausgestaltung der wenigstens einen Behälterbehandlungsmaschine 102 als Blasformmaschine 102 ist als beispielhaft zu verstehen. Die wenigstens eine Behälterbehandlungsmaschine 102 kann auch als jede andere Vorrichtung, welche zur Behandlung von Behältern geeignet ist, ausgestaltet sein kann. Beispielsweise kann die wenigstens eine Behälterbehandlungsmaschine 102 auch als Vorrichtung zur Vorbehandlung von Behältern, beispielsweise mittels eines Corona- und/oder Plasmaverfahrens, als Füller zum Befüllen von Behältern mit einem Getränk oder jeder anderen Flüssigkeit, als Etikettiervorrichtung, als Direktdruckvorrichtung, als Verschließer oder als jede andere Behälterbehandlungsmaschine ausgebildet sein.

In einer Ausführungsform kann es auch vorgesehen sein, dass eine Kombination der eben beschriebenen Behälterbehandlungsmaschinen oder jeder anderen Behälterbehandlungsmaschine in einer Transportrichtung 104 der Vorformlinge 105 stromab der Herstellungsmaschine 101 angeordnet ist.

Die Steuereinheit 103 kann als Computer, Server oder als jede andere Rechnereinheit ausgestaltet sein und mit der Herstellungsmaschine 101 und der Blasformmaschine 102 über Kabelverbindungen 116, 117 verbunden sein. Die Steuereinheit 103 kann auch mit jeder anderen Komponente der Behälterbehandlungsmaschine 100 über eine entsprechende Kabelverbindung in Verbindung stehen. In einer alternativen Ausführungsform kann es alternativ auch vorgesehen sein, dass die Steuereinheit 103 über eine drahtlose Verbindung, beispielsweise über eine WLAN Verbindung, mit den Komponenten der Behälterbehandlungsanlage 100 in Verbindung steht. Aufgrund der Kabel beziehungsweise Drahtloseverbindung zwischen der Steuereinheit 103 und den Komponenten der Behälterbehandlungsanlage 100 kann die Steuereinheit 103 beispielsweise einen Stillstand an einer Komponente der Behälterbehandlungsanlage 100 feststellen und basierend hierauf einen Strom von Vorformlingen 105 in der Behälterbehandlungsanlage 100 steuern. Somit kann auch bei einem Stillstand einer Komponente der Behälterbehandlungsanlage 100 der Betrieb der Behälterbehandlungsanlage 100 zumindest teilweise aufrechterhalten werden.

Zwischen Herstellungsmaschine 101 und Blasformmaschine 102 kann eine erste Transportvorrichtung 108 vorgesehen sein, um die mittels der Herstellungsmaschine 101 hergestellten Vorformlinge 105 zu der Blasformmaschine 102 zu transportieren. Der Transport der Vorformlinge 105 mittels der ersten Transportvorrichtung 108 von der Herstellungsmaschine 101 zu der Blasformmaschine 102 kann beispielsweise dann vorgesehen, wenn sich die Behälterbehandlungsanlage 100 in einem Normalzustand befindet, das heißt keine der Komponenten der Behälterbehandlungsanalage 100 einen Stillstand aufweist.

In einer Transportrichtung 104 der Vorformlinge 105 kann stromab der Blasformmaschine 102 eine zweite Transportvorrichtung 110 vorgesehen sein, mittels welcher die durch die Blasformmaschine 102 zu Behältern 121 ausgeformten Vorformlinge 105 zu einer optionalen weiteren, hier nicht explizit dargestellten, Behälterbehandlungsmaschine transportiert werden können. Bei der optionalen weiteren Behälterbehandlungsmaschine kann es sich um jede der weiter oben beschriebenen Behälterbehandlungsmaschinen oder deren Kombination handeln. So kann in einer Ausführungsform beispielsweise in einer Transportrichtung 104 der Vorformlinge 105 beziehungsweise Behälter 121 stromab der Blasformmaschine 102 beispielsweise ein Füller zum Befüllen der ausgeformten Behälter mit einem Getränk oder jeder anderen Flüssigkeit vorgesehen sein.

In einer Ausführungsform kann die Behälterbehandlungsanlage 100 eine erste Speichervorrichtung 106 zum Speichern von Vorformlingen 105 und/oder eine Box für Schlechtteile 114 zum Zerkleinern von Vorformlingen 105 umfassen. Bei der Box für Schlechtteile 114 kann es sich insbesondere um einen Schredder handeln. In der hier diskutierten Ausführungsform können die Speichervorrichtung 106 und die Box für Schlechtteile 114 seitlich neben der ersten Transportvorrichtung 108 angeordnet sein. Die Speichervorrichtung 106 kann mittels einer dritten Transportvorrichtung 111 mit der ersten Transportvorrichtung 108 verbunden sein und die Box für Schlechtteile 114 mittels einer vierten Transportvorrichtung 115 mit der ersten Transportvorrichtung 108 verbunden sein. Die eben diskutierte Anordnung der ersten Speichervorrichtung 106 und der Box für Schlechtteile 114 ist als beispielhaft zu verstehen. Die erste Speichervorrichtung 106 und die Box für Schlechtteile 114 können auch an jeder anderen Stelle der Behälterbehandlungsanlage 100 angeordnet sein, sofern diese derart angeordnet sind, dass die durch die Herstellungsmaschine 101 hergestellten Vorformlinge der ersten Speichervorrichtung 106 oder der Box für Schlechtteile 114 anstelle der Blasformmaschine 102 zugeführt werden. In einer alternativen Ausführungsform kann es beispielsweise auch vorgesehen sein, dass die erste Speichervorrichtung 106 und die Box für Schlechtteile 114 über entsprechende Transportvorrichtungen direkt mit der Herstellungsmaschine 101 verbunden sind und die Vorformlinge nicht erst an die erste Transportvorrichtung 108 übergeben werden.

In der im Zusammenhang mit der Figur 1 diskutierten Ausführungsform umfasst die Behälterbehandlungsanlage 100 eine optionale Verteileinrichtung 118, wobei die Verteileinrichtung 118 durch die Steuereinheit 103 derart angesteuert werden kann, dass die durch die Herstellungsmaschine 101 hergestellten Vorformlinge 105 entweder von der ersten Transportvorrichtung 108 zu der dritten Transportvorrichtung 111 geleitet und in die erste Speichervorrichtung 106 abgeführt werden können oder von der ersten Transportvorrichtung 108 zu der vierten Transportvorrichtung 115 geleitet und in die Box für Schlechtteile 114 abgeführt werden können oder durch die erste Transportvorrichtung 108 in Transportrichtung 104 zu der Blasformmaschine 102 überführt werden können.

Zum Leiten des Stroms der Vorformlinge 105 in Richtung der ersten Speichervorrichtung 106, in Richtung der Blasformmaschine 102 oder in Richtung der Box für Schlechtteile 114 kann die Verteileinrichtung 118 ein Leitblech umfassen, welches beispielsweise mittels eines Servomotors durch die Steuereinheit 103 derart ausgerichtet werden kann, dass die Vorformlinge 105 entweder zur ersten Speichervorrichtung 106, zur Blasformmaschine 102 oder zur Box für Schlechtteile 114 geleitet werden. Die Verteileinrichtung kann in diesem Sinne als Weiche dienen bzw. als Weiche ausgestaltet sein. Um die Verteileinrichtung ansteuern zu können, kann die Steuereinheit 103 mit der Verteileinrichtung 118 über eine Kabelverbindungen 120 (alternativ kann auch eine Drahtlosverbindung vorgesehen sein) in Verbindung stehen. In der oben kurz umrissenen alternativen Ausführungsform, wo die erste Speichervorrichtung 106 und die Box für Schlechtteile 114 über entsprechende Transportvorrichtungen direkt mit der Herstellungsmaschine 101 in Verbindung stehen, kann es auch vorgesehen sein, dass die Verteileinrichtung 118 in die Herstellungsmaschine 101 integriert ist. In diesem Fall kann die Verteileinrichtung 118 beispielsweise an einem Auslass der Herstellungsmaschine 101 angeordnet sein.

In einer alternativen Ausführungsform kann die Verteileinrichtung 118 auch als Roboter, als Portalsystem oder als jede beliebige Art von Handlingsystem ausgeführt sein. Auch eine Ausgestaltung der Verteilungseinrichtung 118 als eine Vielzahl von ineinander verschalteten Transportbändern ist denkbar.

In einer Ausführungsform kann die Behälterbehandlungsanlage 100 eine zweite Speichervorrichtung 107 für Vorformlinge umfassen, wobei die zweite Speichervorrichtung mit der ersten Speichervorrichtung über eine fünfte Transportvorrichtung 112 verbunden sein kann, so dass die in der ersten Speichervorrichtung 106 gespeicherten Vorformlinge 105 von der ersten 106 an die zweite Speichervorrichtung 107 überführt werden können. Die zweite Speichervorrichtung 107 kann wiederum mit der Blasformmaschine 102 über eine sechste Transportvorrichtung 113 verbunden sein, so dass die in der zweiten Speichervorrichtung 107 gespeicherten Vorformlinge 105 der Blasformmaschine 102 zugeführt werden können. Optional kann zwischen der zweiten Speichervorrichtung 107 und der Blasformmaschine 102 eine Sortiervorrichtung 119 vorgesehen sein. Mittels der Sortiervorrichtung 119 können die in der Speichervorrichtung typischerweise als Schüttgut gelagerten Vorformlinge 105 vereinzelt und der Blasformmaschine 102 geordnet übergeben werden. In einer Ausführungsform kann die Sortiervorrichtung 119 als Rollensortierer ausgestaltet sein. Der Rollensortierer kann beispielsweise derart ausgestaltet sein, dass er die Vorformlinge 105 nicht nur vereinzelt, sondern auch von der zweiten Speichervorrichtung 107 zu der Blasformmaschine 102 transportiert. In diesem Fall ist die Sortiervorrichtung 119 und die zweite Transportvorrichtung 113 als eine Einheit ausgestaltet. Alternativ kann die Sortiervorrichtung 119 beispielsweise auch als Scheibensortierer ausgestaltet sein.

In einer alternativen Ausführungsform kann es auch vorgesehen sein, dass die erste 106 und die zweite Speichervorrichtung 107 identisch sind und als Speichereinheit ausgestaltet sein, wobei in diesem Fall die optionale fünfte Transportvorrichtung 112 nicht benötigt wird. In diesem Fall kann es vorgesehen sein, dass die Speichereinheit über die dritte Transportvorrichtung 111 mit der Herstellungsmaschine 101 und durch die sechste Transportvorrichtung 113 mit der Blasformmaschine 102 verbunden ist. Auch in diesem Fall kann die sechste Transportvorrichtung 113 beispielsweise als Rollensortierer ausgestaltet sein, so dass die Vorformlinge geordnet von der Speichereinheit an die Blasformmaschine 102 übergeben werden können. In diesem Fall können beispielsweise die bei einem Stillstand der Blasformmaschine an die Speichereinheit zugeführten Vorformlinge zu einem späteren Zeitpunkt wieder der Blasformmaschine zugeführt werden, was beispielsweise dann der Fall sein kann, wenn die Herstellungsmaschine 101 einen Stillstand aufweist.

In einer alternativen, hier nicht näher diskutierten Ausführungsform kann es auch vorgesehen sein, dass die erste Speichervorrichtung 106 und die zweite Speichervorrichtung 107 als separate Speichervorrichtungen ausgestaltet sind und nicht miteinander in Verbindung stehen.

In der im Zusammenhang mit den Figuren 1 a - c diskutierten Ausführungsform sind die optionalen Transportvorrichtungen 108, 110, 115, 111, 112 und 113 beispielhaft als lineare Transportvorrichtungen dargestellt. Diese Ausgestaltungsart ist als nicht beschränkend zu verstehen. Die Transportvorrichtungen 108, 110, 115, 111, 112 und 113 können alternativ auch als Transportsterne oder als Kombination von linearen Transporteinrichtungen und Transportsternen vorgesehen sein.

Im Zusammenhang mit den Figuren 1a - 1c werden nun drei verschiedene Betriebszustände der Behälterbehandlungsanlage 100 genauer diskutiert.

In der im Zusammenhang mit der Fig. 1 a beschriebenen Ausführungsform weist die in einer Transportrichtung 104 stromab der Herstellungsmaschine 101 angeordnete Blasformmaschine 102 einen Stillstand auf. Der Stillstand der Blasformmaschine 102 kann beispielsweise durch eine Störung an der Blasformmaschine 102, beispielsweise durch eine defekte Komponente der Blasformmaschine 102, oder durch einen wartungsbedingten Stillstand der Blasformmaschine 102 hervorgerufen sein, welcher beispielsweise durch einen wartungsbedingten Wechsel einer Komponente oder einen Austausch eines Verbrauchsmittels bedingt sein kann. In einer alternativen Ausführungsform kann es beispielsweise auch der Fall sein, dass eine weitere optionale in einer Transportrichtung 104 der Vorformlinge 105 stromab der Blasformmaschine 102 angeordnete Behälterbehandlungsmaschine eine Störung aufweist oder eine Kombination von in einer Transportrichtung 104 stromab der Herstellungsmaschine 101 angeordneter Behälterbehandlungsmaschinen einen Stillstand aufweist.

Um auch im Falle eines Stillstands der Blasformmaschine 102 einen teilweisen Betrieb der Behälterbehandlungsanlage 100 aufrecht erhalten zu können, kann die Steuereinheit 103 die Verteileinrichtung 118 bei Stillstand der Blasformmaschine 102 derart ansteuern, dass die mittels der Herstellungsmaschine 101 hergestellten Vorformlinge 104 von der ersten Transportvorrichtung 108 zu der dritten Transportvorrichtung 111 umgelenkt und in die erste Speichervorrichtung 106 abgeführt werden. Somit kann selbst bei einem Stillstand der Blasformmaschine 102 oder einer anderen optionalen Behälterbehandlungsmaschine ein Weiterbetrieb der Herstellungsmaschine 101 und eine weitere Produktion von Vorformlingen 105 gewährleistet werden. Durch die weitere Produktion von Vorformlingen 105 und deren Überführung in die erste Speichervorrichtung 106 können diese auf Vorrat gespeichert werden und beispielsweise zu einem späteren Zeitpunkt, wenn der Stillstand an der Blasformmaschine 102 behoben wurde, der Blasformmaschine 102 über die zweite Speichervorrichtung 107 wieder zugeführt werden. Alternativ können die in der ersten 106 oder zweiten Speichervorrichtung 107 gespeicherten Vorformlinge 105 der Blasformmaschine 102 beispielsweise auch erst dann zugeführt werden, wenn die Herstellungsmaschine 101 einen Stillstand aufweist und keine neuen Vorformlinge 105 mehr hergestellt werden können. Diese Ausführungsform wird im Zusammenhang mit der Fig. 1c genauer beschrieben.

In einer Ausführungsform kann es vorgesehen sein, dass die mittels der Herstellungsmaschine 101 hergestellten Vorformlinge 104 der ersten Speichervorrichtung 106 nur solange zugeführt werden, bis die Zeitdauer des Stillstands der Blasformmaschine 102 einen bestimmten Schwellenwert erreicht. In einer Ausführungsform kann der Schwellenwert beispielsweise durch eine Speicherkapazität der ersten Speichervorrichtung 106 (beispielsweise 5.000 oder 10.000 Vorformlinge) bestimmt sein. Somit kann sichergestellt werden, dass Vorformlinge 105 der ersten Speichervorrichtung 106 nur so lange zugeführt werden, bis die Speicherkapazität der ersten Speichervorrichtung 106 erreicht wurde. Somit kann beispielsweise eine durch nicht in der ersten Speichervorrichtung 106 speicherbare Vorformlinge 105 hervorgerufene Blockade der ersten 108 und der dritten Transportvorrichtung 111 und eine damit einhergehende potentielle Störung an der Herstellungsmaschine 101 verhindert werden.

In einer Ausführungsform kann es auch vorgesehen sein, dass die Vorformlinge auf die erste 106 und die zweite Speichervorrichtung 107 verteilt werden. In diesem Fall kann der Schwellenwert beispielsweise auch basierend auf einer Speicherkapazität der ersten und der zweiten Speichervorrichtung bestimmt werden.

In einer alternativen Ausführungsform kann es auch vorgesehen sein, dass der Schwellenwert kunden- und/oder sortenspezifisch festgelegt wird.

Überschreitet die Zeitdauer des Stillstands der Blasformmaschine 102 den Schwellenwert kann es in einer Ausführungsform vorgesehen sein, dass der durch die Herstellungsmaschine 101 erzeugte Strom von Vorformlingen nicht an die erste Speichervorrichtung 106, sondern an die Box für Schlechtteile 114 zum Zerkleinern der Vorformlinge 105 abgeführt wird. Diese Ausführungsform wird im Zusammenhang mit der Figur 1b genauer beschrieben.

Figur 1b zeigt schematisch die bereits im Zusammenhang mit der Figur 1a diskutierte Behälterbehandlungsanlage 100 in einem Betriebszustand gemäß einer weiteren Ausführungsform.

Wie bereits im Zusammenhang mit der Figur 1a diskutiert, liegt auch bei der Ausführungsform der Figur 1b ein Stillstand an der Blasformmaschine 102 vor. Im Gegensatz zu der in der Figur 1a diskutierten Ausführungsform steuert die Steuereinheit 103 die Verteileinrichtung 118 in der Ausführungsform der Figur 1b jedoch derart an, dass die von der Herstellungsmaschine 101 erzeugten Vorformlinge 105 von ersten Transportvorrichtung 108 zu der vierten Transportvorrichtung 115 umlenkt und in die Box für Schlechtteile 114 zum Zerkleinern der Vorformlinge 105 abgeführt werden. Wie bereits weiter oben angeführt, kann dies beispielsweise der Fall sein, wenn die Zeitdauer des Stillstands der Blasformmaschine 102 einen Schwellenwert überschreitet.

Alternativ kann es jedoch auch vorgesehen sein, dass die Vorformlinge 105 bei Vorliegen eines Stillstands an der Blasformmaschine 102 beziehungsweise der wenigstens einen Behälterbehandlungsmaschine sofort an die Box für Schlechtteile114 abgeführt werden und nicht erst, nachdem das Zeitintervall des Stillstands der Blasformmaschine einen Schwellenwert erreicht hat.

In einer Ausführungsform kann es vorgesehen sein, dass die durch die Box für Schlechtteile 114 zerkleinerten Vorformlinge 105 der Herstellungsmaschine 101 wieder zugeführt werden können und aus dem zerkleinerten Material neue Vorformlinge erzeugt werden können.

Eine weitere Ausführungsform, welche die bereits im Zusammenhang mit den Figuren 1a und b diskutierte Behälterbehandlungsanlage 100 in einem anderen Betriebszustand zeigt wird in der Figur 1c diskutiert.

In der Ausführungsform der Figur 1c weist die Herstellungsmaschine 101 einen Stillstand auf, so dass keine Vorformlinge 105 mehr durch die Herstellungsmaschine 101 hergestellt werden können und die Blasformmaschine 102 über die erste Transportvorrichtung 108 nicht mehr mit Vorformlingen 105 versorgt werden kann.

Um zumindest einen teilweisen Betrieb der Behälterbehandlungsanlage aufrecht zu erhalten, d.h. die Ausformung von Vorformlingen 105 durch die Blasformmaschine 102 weiter zu ermöglichen, kann es vorgesehen sein, dass die Steuereinheit 103 die zweite Speichereinrichtung 107 sowie die sechste Transportvorrichtung 113 derart ansteuert, dass die Blasformmaschine 102 mit Vorformlinge 105 aus der zweiten Speichervorrichtung 107 versorgt wird. Die zweite Speichervorrichtung 107 kann wiederum mit Vorformlingen 105 aus der ersten Speichervorrichtung 106 versorgt werden, wobei die Vorformlinge 105 mittels der fünften Transportvorrichtung 112 von der ersten 106 zu der zweiten Speichervorrichtung 107 transportiert werden können.

Um im Falle eines Stillstands der Herstellungsmaschine 101 sicherzustellen, dass die erste 106 beziehungsweise zweite Speichervorrichtung 107 zumindest teilweise mit Vorformlingen 105 gefüllt ist, so dass die Blasformmaschine 102 beziehungsweise die wenigstens eine Behälterbehandlungsmaschine im Falle eines Stillstands der Herstellungsmaschine 101 mit Vorformlingen 105 versorgt werden kann und ein teilweiser Betrieb der Behälterbehandlungsanlage 100 aufrechterhalten werden kann, kann es in einer Ausführungsform vorgesehen sein, dass die erste 106 und die zweite Speichervorrichtung 107 vor einem Betriebsstart der Behälterbehandlungsanlage zumindest teilweise mit extern hergestellten Vorformlingen gefüllt werden.

Alternativ kann es in einer Ausführungsform beispielsweise auch vorgesehen sein, dass bei einem Betriebsstart der Behälterbehandlungsanlage, die Steuereinheit 103 die Verteileinrichtung 118 zunächst derart ansteuert, dass die von der Herstellungsmaschine 101 hergestellten Vorformlinge 105 während eines bestimmten Zeitintervalls nach Betriebsstart der Behälterbehandlungsanlage 100 der ersten 106 beziehungsweise der zweiten Speichervorrichtung 107 zugeführt werden und die Speichervorrichtungen mit Vorformlingen gefüllt werden können.

Das bestimmte Zeitintervall kann beispielsweise basierend auf einer Speicherkapazität der ersten und/oder der zweiten Speichervorrichtung gewählt sein oder dynamisch basierend auf einem Fülllevel der ersten und/oder zweiten Speichervorrichtung bestimmt werden. Ist ein bestimmtes Fülllevel der ersten und/oder der zweiten Speichervorrichtung erreicht, kann die Steuereinheit 103 ausgestaltet sein, die Verteileinrichtung 118 derart anzusteuern, dass die von der Herstellungsmaschine 101 hergestellten Vorformlinge 105 der Blasformmaschine 102 zugeführt werden und in einen Normalbetrieb der Behälterbehandlungsanlage 100 übergegangen werden kann. Beispielsweise kann es vorgesehen sein, die erste Speichervorrichtung 106 und die zweite Speichervorrichtung 107 mit einem Viertel, der Hälfte oder drei Viertel der maximal speicherbaren Menge an Vorformlingen befüllt werden.

## Patentansprüche

1. Behälterbehandlungsanlage (100) zum Herstellen und Behandeln von Vorformlingen (105), wobei die Behälterbehandlungsanlage (100) eine Herstellungsmaschine (101) zum Herstellen von Vorformlingen (105), insbesondere eine Spritzgussmaschine, wenigstens eine in einer Transportrichtung (104) der Vorformlinge (105) stromab der Herstellungsmaschine (101) angeordnete Behälterbehandlungsmaschine (102) und eine Steuereinheit (103) umfasst, wobei die Steuereinheit (103) ausgebildet ist, basierend auf einem Stillstand einer Komponente der Behälterbehandlungsanlage (100) einen Strom von Vorformlingen (105) in der Behälterbehandlungsanlage (100) zu steuern.

2. Behälterbehandlungsanlage nach Anspruch 1, wobei die Komponente die wenigstens eine Behälterbehandlungsmaschine (102) umfasst.

3. Behälterbehandlungsanlage nach einem der Ansprüche 1 oder 2, wobei, wenn eine Zeitdauer des Stillstands kleiner als ein Schwellenwert ist, das Steuern des Stroms der Vorformlinge (105) das Abführen der durch die Herstellungsmaschine (101) hergestellten Vorformlinge (105) in eine erste Speichervorrichtung (106) umfasst.

4. Behälterbehandlungsanlage nach Anspruch 2 oder 3, wobei, wenn eine Zeitdauer des Stillstands größer als ein Schwellenwert ist, das Steuern des Stroms der Vorformlinge (105) das Abführen der durch die Herstellungsmaschine (101) hergestellten Vorformlinge (105) in eine Box für Schlechtteile (114) zum Zerkleinern der Vorformlinge (105), insbesondere einen Schredder, umfasst.

5. Behälterbehandlungsanlage nach Anspruch 3 oder 4, wobei die Steuereinheit (103) ausgebildet ist, den Schwellenwert basierend auf einer Speicherkapazität der ersten Speichervorrichtung (106) zu bestimmen.

6. Behälterbehandlungsanlage nach einem der Ansprüche 1 bis 5, wobei die Komponente die Herstellungsmaschine (101) umfasst.

7. Behälterbehandlungsanlage nach Anspruch 6, wobei das Steuern des Stroms der Vorformlinge (105) das Zuführen von Vorformlingen (105) an die wenigstens eine Behälterbehandlungsmaschine aus einer zweiten Speichervorrichtung (107) umfasst.

8. Behälterbehandlungsanlage nach Anspruch 7, wobei eine Sortiervorrichtung (119) zwischen der zweiten Speichervorrichtung (107) und der wenigstens einen Behälterbehandlungsmaschine (102) angeordnet ist und die Vorformlinge (105) der wenigstens einen Behälterbehandlungsmaschine (102) geordnet zugeführt werden können.

9. Verfahren zum Herstellen und Behandeln von Vorformlingen (105) in einer Behälterbehandlungsanlage (100), wobei die Behälterbehandlungsanlage (100) eine Herstellungsmaschine (101) zum Herstellen von Vorformlingen (105), insbesondere eine Spritzgussmaschine, wenigstens eine in einer Transportrichtung (104) der Vorformlinge (105) stromab der Herstellungsmaschine (101) angeordnete Behälterbehandlungsmaschine (102) und eine Steuereinheit (103) umfasst, wobei ein Strom von Vorformlingen in der Behälterbehandlungsanlage (100), basierend auf einem Stillstand einer Komponente der Behälterbehandlungsanlage (100) durch die Steuereinheit (103) gesteuert wird.

10. Verfahren nach Anspruch 9, wobei die Komponente die wenigstens eine Behälterbehandlungsmaschine (102) umfasst.

11. Verfahren nach Anspruch 10, wobei, wenn eine Zeitdauer des Stillstands kleiner als ein Schwellenwert ist, der Strom der Vorformlinge (105) derart gesteuert wird, dass die durch die Herstellungsmaschine (101) hergestellten Vorformlinge (105) in eine erste Speichervorrichtung (106) überführt werden.

12. Verfahren nach Anspruch 10 oder 11, wobei, wenn eine Zeitdauer des Stillstands größer als ein Schwellenwert ist, der Strom der Vorformlinge (105) derart gesteuert wird, dass die durch die Herstellungsmaschine (101) hergestellten Vorformlinge (105) einer Box für Schlechtteile (114) zum Zerkleinern der Vorformlinge (105), insbesondere einem Schredder, zugeführt werden.

13. Verfahren nach einem der Ansprüche 11 oder 12, wobei der Schwellenwert durch die Steuereinheit (103) basierend auf einer Speicherkapazität der ersten Speichervorrichtung (106) bestimmt wird.

14. Verfahren nach einem der Ansprüche 9 bis 13, wobei die Komponente die Herstellungsmaschine (101) umfasst und wobei der Strom der Vorformlinge (105) derart gesteuert wird, dass der wenigstens einen Behälterbehandlungsmaschine (102) Vorformlinge (105) aus einer zweiten Speichervorrichtung (107) zugeführt werden.

15. Verfahren nach Anspruch 14, wobei eine Sortiervorrichtung (119) zwischen der zweiten Speichervorrichtung (107) und der wenigstens einen Behälterbehandlungsmaschine (102) angeordnet ist und die Vorformlinge (105) der wenigstens einen Behälterbehandlungsmaschine (102) geordnet zugeführt werden.
